# EUROPEAN PATENT SPECIFICATION

(11) **EP 4 079 545 B1**
(45) Date of publication and mention of the grant of the patent: **06.12.2023**
(21) Application number: 22161260.9
(22) Date of filing: 10.03.2022
(51) Int. Cl.: B60C 13/00, B60C 15/06, B60C 11/04, B60C 11/12, B60C 11/03

(54) **TIRE**
REIFEN
PNEUMATIQUE

(30) Priority: 22.04.2021 JP 2021072330
(43) Date of publication of application: 26.10.2022
(73) Proprietor: SUMITOMO RUBBER INDUSTRIES, LTD., Kobe-shi, Hyogo 651-0072 (JP)
(72) Inventor: NAKAYAMA, Hiroyuki, Kobe-shi, Hyogo, 651-0072 (JP)
(74) Representative: Winter, Brandl - Partnerschaft mbB

(56) References cited:
- WO-A1-2020/144993
- JP-A- 2017 121 899
- US-B2- 10 071 597

## Description

### BACKGROUND OF THE INVENTION

### Field of the Invention

The present invention relates to a tire.

### Background Art

For example, in Japanese Laid-Open Patent Publication No. 2017-121899, the performance of a tire such as durability, rolling resistance, and ride comfort is controlled by adjusting a contour from each shoulder portion of a tread to each sidewall, that is, the contour of each side surface. In order to control the performance of a tire, the contour of the tire may be adjusted in addition to the physical properties, arrangement, etc., of the components included in the tire.

Tires having low rolling resistance are required in consideration of influence on the environment. When a rubber that has low-heat generation properties is used for a tread, the rolling resistance of a tire is reduced. When a rubber that has low-heat generation properties is used for the tread, the coefficient of friction of the tire is decreased. In this case, the braking performance is decreased. If the coefficient of friction of the tire is increased in order to improve the braking performance, the rolling resistance increases.
Document WO 2020/144993 A1 discloses a tire according to the preamble of claim 1. Document US 10 071 597 B2 discloses a tire having a low rolling resistance due to reduced weight.

Starting from a tire as disclosed in WO 2020/144993 A1 an object of the present invention is to provide a tire that can achieve improvement of braking performance without a significant increase in rolling resistance.

### SUMMARY OF THE INVENTION

A tire according to an aspect of the present invention includes: a tread configured to come into contact with a road surface; a pair of sidewalls each connected to an end of the tread and located inward of the tread in a radial direction; a pair of beads each located inward of the sidewall in the radial direction; and a carcass located inward of the tread and the pair of sidewalls. Each bead includes a core and an apex located outward of the core in the radial direction. A ratio of a height of the apex to a cross-sectional height is not less than 5% and not greater than 15%. In a meridian cross-section in a state where the tire is fitted on a normal rim, an internal pressure of the tire is adjusted to 250 kPa, and no load is applied to the tire, a contour of each side surface including a maximum width position includes two arcs tangent to each other at the maximum width position, of the two arcs, the arc located inward of the maximum width position in the radial direction is a first arc, and the arc located outward of the maximum width position in the radial direction is a second arc. A ratio of a radius of the first arc to a radius of the second arc is not less than 70% and not greater than 91%.

Preferably, in the tire, the radius of the first arc is not less than 50 mm and not greater than 65 mm.

Preferably, in the tire, the carcass includes a carcass ply. The carcass ply includes a ply body extending between one bead and the other bead, and a pair of turned-up portions connected to the ply body and turned up around the beads from an inner side toward an outer side in an axial direction. A ratio of a distance in the radial direction from a bead base line to an end of the turned-up portion to a distance in the radial direction from the bead base line to the maximum width position is not less than 48% and not greater than 68%.

Preferably, in the tire, a plurality of circumferential grooves are formed on the tread, whereby a plurality of land portions are formed, and, among the plurality of land portions, the land portion located on each outer side in the axial direction is a shoulder land portion, and the land portion located inward of the shoulder land portion is a middle land portion. An outer surface of the middle land portion has an outwardly curved contour. A maximum height of the outer surface is not less than 0.05 mm and not greater than 0.15 mm.

Preferably, in the tire, a lateral sipe is formed on the middle land portion so as to extend substantially in the axial direction, and an edge of the lateral sipe is chamfered.

Preferably, in the tire, a lateral groove and a lateral sipe are formed on the shoulder land portion so as to extend substantially in the axial direction, and edges of the lateral groove and the lateral sipe are chamfered.

According to the present invention, a tire that can achieve improvement of braking performance without a significant increase in rolling resistance is obtained.

### BRIEF DESCRIPTION OF THE DRAWINGS

FIG. 1 is a cross-sectional view showing a part of a tire according to an embodiment of the present invention;
FIG. 2 is a cross-sectional view showing a bead portion of the tire;
FIG. 3 is a development showing the outer surface of a tread;
FIG. 4 is a cross-sectional view showing a part of the tread;
FIG. 5 is a cross-sectional view taken along a line a-a in FIG. 3; and
FIG. 6 is a cross-sectional view taken along a line b-b in FIG. 3.

### DETAILED DESCRIPTION

Hereinafter, the present invention will be described in detail based on preferred embodiments with appropriate reference to the drawings.

In the present invention, a state where a tire is fitted on a normal rim, the internal pressure of the tire is adjusted to a normal internal pressure, and no load is applied to the tire is referred to as a normal state. A state where a tire is fitted on a normal rim, the internal pressure of the tire is adjusted to 250 kPa, and no load is applied to the tire is referred to as a standard state.

In the present invention, unless otherwise specified, the dimensions and angles of each component of the tire are measured in the standard state. The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between left and right beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

The normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

The rim includes a seat and a flange. When the tire is fitted to the rim, the inner peripheral surface of the bead portion is placed on the seat, and the outer surface of the bead portion comes into contact with the flange.

In the present invention, a loss tangent (also referred to as tanδ), at a temperature of 30°C, of a component formed from a crosslinked rubber, of the components included in the tire, is measured using a viscoelasticity spectrometer ("VES" manufactured by Iwamoto Seisakusho) under the following conditions according to the standards of JIS K6394.
Initial strain = 10%
Dynamic strain = 2%
Frequency = 10 Hz
Deformation mode = tension

In this measurement, a test piece is sampled from the tire. When a test piece cannot be sampled from the tire, a test piece is sampled from a sheet-shaped crosslinked rubber (hereinafter, also referred to as a rubber sheet) obtained by pressurizing and heating a rubber composition, which is used for forming the component to be measured, at a temperature of 170°C for 12 minutes.

In the present invention, the hardness of a component formed from a crosslinked rubber, of the components included in the tire, is measured according to the standards of JIS K6253 under a temperature condition of 23°C using a type A durometer. If the hardness cannot be measured in the tire, a test piece formed from a crosslinked rubber obtained by pressurizing and heating a rubber composition, which is used for forming the component to be measured, at a temperature of 170°C for 12 minutes is used.

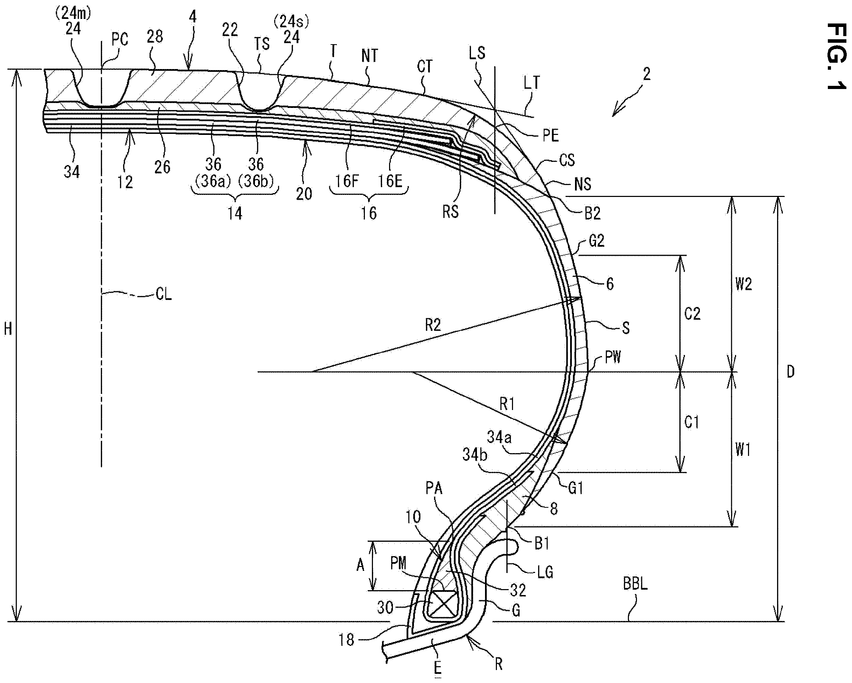

FIG. 1 shows a part of a tire 2 according to an embodiment of the present invention. The tire 2 is a tire for a passenger car. In FIG. 1, the tire 2 is fitted on a rim R. The rim R is a normal rim. The interior of the tire 2 is filled with air to adjust the internal pressure of the tire 2. The tire 2 shown in FIG. 1 is in the standard state.

The tire 2 fitted on the rim R is also referred to as a tire-rim assembly. The tire-rim assembly includes the rim R and the tire 2 fitted on the rim R.

FIG. 1 shows a part of a cross-section (hereinafter, also referred to as a meridian cross-section) of the tire 2 taken along a plane including the rotation axis (not shown) of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. In FIG. 1, an alternate long and short dash line CL represents the equator plane of the tire 2.

In FIG. 1, a solid line BBL extending in the axial direction is a bead base line. The bead base line BBL is a line that defines the rim diameter (see JATMA or the like) of the rim R.

In FIG. 1, a position indicated by reference character PW is an outer end in the axial direction of the tire 2. In the case where decorations such as patterns and letters are present on the outer surface of the tire 2, the outer end PW is specified on the basis of a virtual outer surface obtained on the assumption that the decorations are not present. The distance in the axial direction from one outer end PW to the other outer end PW is the maximum width of the tire 2, that is, the cross-sectional width (see JATMA or the like) of the tire 2. Each outer end PW is a position (hereinafter, referred to as a maximum width position) at which the tire 2 has the maximum width. The maximum width position PW is specified in the tire 2 in the standard state.

The tire 2 includes a tread 4, a pair of sidewalls 6, a pair of clinches 8, a pair of beads 10, a carcass 12, a belt 14, a band 16, a pair of chafers 18, and an inner liner 20.

The tread 4 comes into contact with a road surface at the outer surface thereof. Grooves 22 are formed on the tread 4. Accordingly, a tread pattern is formed.

The grooves 22 forming the tread pattern of the tire 2 include circumferential grooves 24 continuously extending in the circumferential direction. In the tire 2, a plurality of circumferential grooves 24 are formed on the tread 4 so as to be aligned in the axial direction. In the tire 2 shown in FIG. 1, three circumferential grooves 24 are formed on the tread 4. Among the three circumferential grooves 24, the circumferential groove 24 located on each outer side in the axial direction is a shoulder circumferential groove 24s. The circumferential groove 24 located inward of the shoulder circumferential groove 24s in the axial direction is a middle circumferential groove 24m. In the tire 2, the middle circumferential groove 24m is located on the equator plane CL.

In the tire 2, the arrangement, the groove depths, and the groove widths of the circumferential grooves 24 formed on the tread 4 are not particularly limited. As the arrangement, the groove depths, and the groove widths of the circumferential grooves 24 of the tire 2, a typical arrangement, groove depth, and groove width are applied to the tread 4.

In FIG. 1, a position indicated by reference character PC corresponds to the equator of the tire 2. The equator PC is the point of intersection of the outer surface of the tread 4 and the equator plane CL. In the tire 2, since the middle circumferential groove 24m is located on the equator plane CL, the equator PC is specified on the basis of a virtual outer surface obtained on the assumption that the middle circumferential groove 24m is not provided.

In FIG. 1, a length indicated by reference character H is the cross-sectional height (see JATMA or the like) of the tire 2. The cross-sectional height H is the distance in the radial direction from the bead base line BBL to the equator PC. The cross-sectional height H is measured in the tire 2 in the standard state.

The tread 4 has a base layer 26 and a cap layer 28. The base layer 26 covers the belt 14 and the band 16. The base layer 26 is formed from a crosslinked rubber that has low-heat generation properties. In the tire 2, the loss tangent at 30°C of the base layer 26 is not greater than 0.11.

The cap layer 28 is located outward of the base layer 26 in the radial direction. The cap layer 28 covers the entirety of the base layer 26. The outer surface of the cap layer 28 is the outer surface of the tread 4. The cap layer 28 is formed from a crosslinked rubber for which wear resistance and grip performance are taken into consideration. The loss tangent of the cap layer 28 is larger than that of the base layer 26. From the viewpoint that the cap layer 28 can contribute to reduction of rolling resistance, the loss tangent of the cap layer 28 is preferably not greater than 0.30 and more preferably not greater than 0.20.

Each sidewall 6 is connected to an end of the tread 4. The sidewall 6 is located inward of the tread 4 in the radial direction. The sidewall 6 extends from the end of the tread 4 toward the clinch 8 along the carcass 12. The sidewall 6 is formed from a crosslinked rubber for which cut resistance is taken into consideration.

Each clinch 8 is located inward of the sidewall 6 in the radial direction. The clinch 8 comes into contact with a flange G of the rim R. The clinch 8 is formed from a crosslinked rubber for which abrasion resistance is taken into consideration.

Each bead 10 is located inward of the clinch 8 in the axial direction. The bead 10 is located inward of the sidewall 6 in the radial direction. The bead 10 includes a core 30 and an apex 32. Although not shown, the core 30 includes a wire made of steel.

The apex 32 is located outward of the core 30 in the radial direction. The apex 32 is tapered outward. The apex 32 is formed from a crosslinked rubber that has high stiffness. The hardness of the apex 32 is not less than 80 and not greater than 98. In FIG. 1, a position indicated by reference character PA is the outer end in the radial direction (hereinafter, also referred to as a tip) of the apex 32.

The carcass 12 is located inward of the tread 4, the pair of sidewalls 6, and the pair of clinches 8. The carcass 12 extends on and between one bead 10 and the other bead 10. The carcass 12 has a radial structure.

The carcass 12 includes at least one carcass ply 34. From the viewpoint of reduction of rolling resistance, the carcass 12 is preferably composed of one carcass ply 34.

The carcass 12 of the tire 2 is composed of one carcass ply 34. The carcass ply 34 includes a ply body 34a which extends between one bead 10 and the other bead 10, and a pair of turned-up portions 34b which are connected to the ply body 34a and turned up around the respective beads 10 from the inner side toward the outer side in the axial direction. In the radial direction, the end of each turned-up portion 34b is located inward of the maximum width position PW. The end of the turned-up portion 34b is located between the ply body 34a and the sidewall 6. In a zone from the tip PA of the apex 32 to the end of the turned-up portion 34b, the turned-up portion 34b is joined to the ply body 34a.

Each carcass ply 34 includes a large number of carcass cords aligned with each other, which are not shown. Each carcass cord intersects the equator plane CL. The carcass cords are cords formed from an organic fiber. Examples of the organic fiber include nylon fibers, rayon fibers, polyester fibers, and aramid fibers.

The belt 14 is located inward of the tread 4 in the radial direction. The belt 14 is stacked on the carcass 12 from the outer side in the radial direction. In the tire 2, the width in the axial direction of the belt 14 is not less than 65% and not greater than 85% of the cross-sectional width.

The belt 14 includes at least two layers 36 stacked in the radial direction. The belt 14 of the tire 2 is composed of two layers 36 stacked in the radial direction. Of the two layers 36, the layer 36 located on the inner side is an inner layer 36a, and the layer 36 located on the outer side is an outer layer 36b. As shown in FIG. 1, the inner layer 36a is wider than the outer layer 36b. The length from the end of the outer layer 36b to the end of the inner layer 36a is not less than 3 mm and not greater than 10 mm.

Each of the inner layer 36a and the outer layer 36b includes a large number of belt cords aligned with each other, which are not shown. Each belt cord is inclined relative to the equator plane CL. The material of each belt cord is steel.

The band 16 is located between the tread 4 and the belt 14 in the radial direction. The band 16 is stacked on the belt 14 on the inner side of the tread 4. The band 16 covers the entirety of the belt 14. The band 16 is wider than the belt 14. The length from an end of the belt 14 to an end of the band 16 is not less than 3 mm and not greater than 7 mm.

The band 16 includes a helically wound band cord which is not shown. The band cord extends substantially in the circumferential direction. Specifically, an angle of the band cord with respect to the circumferential direction is not greater than 5°. The band 16 has a jointless structure. In the tire 2, a cord formed from an organic fiber is used as the band cord. Examples of the organic fiber include nylon fibers, rayon fibers, polyester fibers, and aramid fibers.

The band 16 of the tire 2 includes a full band 16F and a pair of edge bands 16E. The full band 16F has ends opposing each other across the equator plane CL. Each end of the full band 16F is located outward of the end of the belt 14 in the axial direction. The full band 16F is stacked on the belt 14. The full band 16F covers the entirety of the belt 14 from the outer side in the radial direction. The pair of edge bands 16E are disposed so as to be spaced apart from each other in the axial direction with the equator plane CL therebetween. Each edge band 16E is stacked on the full band 16F. The edge band 16E covers the end of the full band 16F from the outer side in the radial direction. The band 16 may be composed of a full band 16F, or may be composed of a pair of edge bands 16E.

Each chafer 18 is located radially inward of the bead 10. The chafer 18 comes into contact with a seat E of the rim R. The chafer 18 of the tire 2 includes a fabric and a rubber with which the fabric is impregnated.

The inner liner 20 is located inward of the carcass 12. The inner liner 20 forms an inner surface of the tire 2. The inner liner 20 is formed from a crosslinked rubber that has a low gas permeability coefficient. The inner liner 20 maintains the internal pressure of the tire 2.

The contour of the tire 2 is obtained, for example, by measuring the outer surface shape of the tire 2 in the standard state by a displacement sensor. In the meridian cross-section, the contour of the outer surface (hereinafter, referred to as a tire outer surface TS) of the tire 2 is formed by connecting a plurality of contour lines each formed as a straight line or an arc. In the present invention, the contour line formed as a straight line or an arc is referred to simply as a contour line. The contour line formed as a straight line is referred to as a straight contour line, and the contour line formed as an arc is referred to as a curved contour line.

The tire outer surface TS includes a tread surface T and a pair of side surfaces S connected to the ends of the tread surface T. In the present invention, the contour of the tread surface T is described as the contour of a virtual outer surface (also referred to as a virtual tread surface) obtained on the assumption that no grooves are provided thereon. The tread surface T includes the above-described equator PC. The contour of each side surface S is described as the contour of a virtual outer surface (also referred to as a virtual side surface) obtained on the assumption that no decorations such as patterns and characters are provided thereon. Each side surface S includes the above-described maximum width position PW.

In the meridian cross-section, the contour of the tread surface T includes a plurality of curved contour lines having different radii. In the tire 2, among the plurality of curved contour lines included in the contour of the tread surface T, a curved contour line having the smallest radius is located at the end portion of the tread surface T and is connected to the side surface S. In the meridian cross-section, the contour of the tire outer surface TS includes, on each end portion of the tread surface T, a curved line portion that is a curved contour line connected to the side surface S and formed as an arc having the smallest radius among the plurality of curved contour lines included in the contour of the tread surface T. In FIG. 1, the curved line portion is indicated by reference character RS.

In the contour of the tire outer surface TS, the curved line portion RS is tangent to a contour line (hereinafter, referred to as an inner adjacent contour line NT) adjacent to the curve line portion RS on the inner side in the axial direction, at a contact point CT. The curved line portion RS is tangent to a contour line (hereinafter, referred to as an outer adjacent contour line NS) that is adjacent to the curve line portion RS on the outer side in the axial direction and forms a contour of the side surface S, at a contact point CS. The contour of the tire outer surface TS includes the inner adjacent contour line NT which is located axially inward of the curved line portion RS and is tangent to the curved line portion RS, and the outer adjacent contour line NS which is located axially outward of the curved line portion RS and is tangent to the curved line portion RS.

In FIG. 1, a solid line LT is a line tangent to the curved line portion RS at the contact point CT between the inner adjacent contour line NT and the curved line portion RS. A solid line LS is a line tangent to the curved line portion RS at the contact point CS between the outer adjacent contour line NS and the curved line portion RS. A position indicated by reference character PE is the point of intersection of the tread surface T and a straight line that passes through the point of intersection of the tangent line LT and the tangent line LS and that extends in the radial direction. In the tire 2, the point of intersection PE is a tread reference end. The contact point CS corresponds to the boundary between the tread surface T and the side surface S.

In FIG. 1, reference character B1 indicates a specific position on the side surface S. A solid line LG is a straight line that passes through the outer end in the radial direction of the flange G and that extends in the radial direction. The specific position B1 is the point of intersection of the straight line LG and the side surface S. The specific position B1 is a flange reference position.

In FIG. 1, reference character B2 indicates a specific position on the side surface S. A length indicated by a double-headed arrow D is the distance in the radial direction from the bead base line BBL to the specific position B2. In the tire 2, the distance D in the radial direction is set to be 0.77 times the cross-sectional height H. The specific position B2 is a position, on the side surface S, at which the distance D in the radial direction from the bead base line BBL indicates 0.77 times the cross-sectional height H. The specific position B2 is a buttress reference position.

As described above, each side surface S includes the maximum width position PW. In the meridian cross-section, the contour of the side surface S includes two curved contour lines, that is, two arcs, which are tangent to each other at the maximum width position PW. Of the two arcs that are tangent to each other at the maximum width position PW, the arc located inward of the maximum width position PW in the radial direction is a first arc, and the arc located outward of the maximum width position PW in the radial direction is a second arc. The curved contour line composed of the first arc is also referred to as a first curved contour line, and the curved contour line composed of the second arc is also referred to as a second curved contour line.

In FIG. 1, an arrow indicated by reference character R1 indicates the radius of the first arc, and an arrow indicated by reference character R2 indicates the radius of the second arc. The center of the first arc and the center of the second arc are located on a straight line that passes through the maximum width position PW and that extends in the axial direction.

In the tire 2, the radius R1 of the first arc is smaller than the radius R2 of the second arc. Specifically, the ratio (R1/R2) of the radius R1 of the first arc to the radius R2 of the second arc is not greater than 91%. Accordingly, in the meridian cross-section, the carcass 12 can be disposed further outside. Since the carcass 12 is formed so as to be longer, the vertical stiffness is effectively reduced in the tire 2. Since the vertical stiffness is low, the tire 2 can ensure a wide ground-contact surface during braking in which a large load is applied. From this viewpoint, the ratio (R1/R2) is preferably not greater than 90%, more preferably not greater than 88%, and further preferably not greater than 86%.

In the tire 2, the ratio (R1/R2) of the radius R1 of the first arc to the radius R2 of the second arc is not less than 70%. Accordingly, the contact area between the bead portion and the flange G is appropriately maintained. The fluctuation of friction and strain caused by repeated deformation and restoration of the bead portion during running is effectively suppressed, so that good durability is maintained. From this viewpoint, the ratio (R1/R2) is preferably not less than 75%, more preferably not less than 78%, and further preferably not less than 80%.

In FIG. 1, a position indicated by reference character PM is the width center in the axial direction of a surface, of the apex 32, which is in contact with the core 30. A length indicated by reference character A is the distance in the radial direction from the width center PM to the tip PA of the apex 32. In the tire 2, the distance A in the radial direction is the height of the apex 32.

In the tire 2, the ratio (A/H) of the height A of the apex 32 to the cross-sectional height H is not greater than 15%. The ratio (A/H) is usually set so as to be not less than about 20%. The height A of the apex 32 is low. The apex 32 having a low height A contributes to reduction of vertical stiffness. The apex 32 also contributes to disposing the carcass 12 further outside in the meridian cross-section. In the tire 2, the vertical stiffness is effectively reduced. The apex 32 contributes to ensuring a ground-contact area. The apex 32 also contributes to reduction of rolling resistance.

In the tire 2, the ratio (A/H) of the height A of the apex 32 to the cross-sectional height H is not less than 5%. In the tire 2, the apex 32 having the required height A is formed. The apex 32 effectively holds the core 30 in the bead portion fitted on the rim R. The movement of the core 30 during running is suppressed, so that the required durability is ensured in the tire 2.

In the tire 2, the ratio (R1/R2) of the radius R1 of the first arc to the radius R2 of the second arc is not greater than 91%, and the ratio (A/H) of the height A of the apex 32 to the cross-sectional height H is not greater than 15%. In the tire 2, a ground-contact width increases, and a ground-contact area increases. The increase in ground-contact area increases the coefficient of friction of the tire 2. In the tire 2, even when a rubber that has low-heat generation properties is used for the tread 4, good braking performance is achieved. It is not necessary to use a rubber that places importance on grip force and that has heat generation properties, for the tread 4 in order to increase the coefficient of friction. In the tire 2, improvement of braking performance can be achieved without a significant increase in rolling resistance.

In the tire 2, the ratio (R1/R2) of the radius R1 of the first arc to the radius R2 of the second arc is not less than 70%, and the ratio (A/H) of the height A of the apex 32 to the cross-sectional height H is not less than 5%. In the tire 2, the required durability is ensured.

In the tire 2, the ratio (R1/R2) of the radius R1 of the first arc to the radius R2 of the second arc is not less than 70% and not greater than 91%, and the ratio (A/H) of the height A of the apex 32 to the cross-sectional height H is not less than 5% and not greater than 15%. The tire 2 can achieve improvement of braking performance without a significant increase in rolling resistance and a significant decrease in durability.

In the tire 2, preferably, the radius R1 of the first arc is not less than 50 mm and not greater than 65 mm. When the radius R1 is set so as to be not less than 50 mm, the contact area between the bead portion and the flange G is appropriately maintained. The fluctuation of friction and strain caused by repeated deformation and restoration of the bead portion during running is effectively suppressed, so that good durability is maintained. From this viewpoint, the radius R1 is more preferably not less than 53 mm and further preferably not less than 55 mm. When the radius R1 is set so as to be not greater than 65 mm, the carcass 12 can be disposed further outside in the meridian cross-section. Since the carcass 12 is formed so as to be longer, the vertical stiffness is effectively reduced in the tire 2. The tire 2 can ensure a wide ground-contact surface during braking in which a large load is applied. In the tire 2, good braking performance is achieved. From this viewpoint, the radius R1 is more preferably not greater than 62 mm and further preferably not greater than 60 mm.

In FIG. 1, a position indicated by reference character G1 is an end point of the first arc when the maximum width position PW is defined as a start point of the first arc. A length indicated by reference character C1 is the distance in the radial direction from the maximum width position PW to the end point G1. A length indicated by reference character W1 is the distance in the radial direction from the maximum width position PW to the flange reference position B1.

In the tire 2, from the viewpoint that a portion, of the side surface S, which is represented by the first arc can effectively contribute to reduction of vertical stiffness, the ratio (C1/W1) of the distance C1 in the radial direction from the maximum width position PW to the end point G1 of the first arc, to the distance W1 in the radial direction from the maximum width position PW to the flange reference position B1, is preferably not less than 0.70, more preferably not less than 0.80, and further preferably not less than 0.90. The ratio (C1/W1) is particularly preferably 1.00.

In FIG. 1, a position indicated by reference character G2 is an end point of the second arc when the maximum width position PW is defined as a start point of the second arc. A length indicated by reference character C2 is the distance in the radial direction from the maximum width position PW to the end point G2. A length indicated by reference character W2 is the distance in the radial direction from the maximum width position PW to the buttress reference position B2.

In the tire 2, from the viewpoint that a portion, of the side surface S, which is represented by the second arc can effectively contribute to reduction of vertical stiffness, the ratio (C2/W2) of the distance C2 in the radial direction from the maximum width position PW to the end point G2 of the second arc, to the distance W2 in the radial direction from the maximum width position PW to the buttress reference position B2, is preferably not less than 0.70, more preferably not less than 0.80, and further preferably not less than 0.90. The ratio (C2/W2) is particularly preferably 1.00.

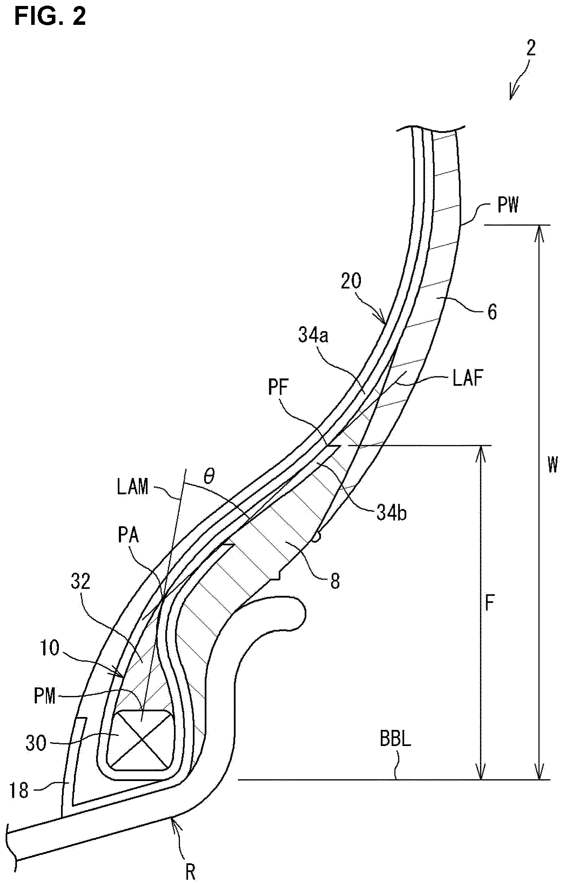

FIG. 2 shows a part of the meridian cross-section shown in FIG. 1. FIG. 2 shows the bead portion of the tire 2. In FIG. 2, the right-left direction is the axial direction of the tire 2, and the up-down direction is the radial direction of the tire 2. The direction perpendicular to the surface of the drawing sheet of FIG. 2 is the circumferential direction of the tire 2.

In FIG. 2, a position indicated by reference character PF is the end of the turned-up portion 34b. A length indicated by reference character F is the distance in the radial direction from the bead base line BBL to the end PF of the turned-up portion 34b. The distance F in the radial direction is the height of the turned-up portion 34b. A length indicated by reference character W is the distance in the radial direction from the bead base line BBL to the maximum width position PW. The distance W in the radial direction is a maximum width height.

In the tire 2, the ratio (F/W) of the height F of the turned-up portion 34b to the maximum width height W is preferably not less than 48% and not greater than 68%.

When the ratio (F/W) is set so as to be not less than 48%, concentration of strain on the end PF of the turned-up portion 34b when a force is applied to the bead portion is suppressed. In the tire 2, good durability is achieved. From this viewpoint, the ratio (F/W) is more preferably not less than 50%. When the ratio (F/W) is set so as to be not greater than 68%, the vertical stiffness can be effectively reduced, so that the tire 2 can ensure a wide ground-contact surface during braking in which a large load is applied. In the tire 2, good braking performance is achieved. The low turned-up portion 34b also contributes to reduction of rolling resistance. From this viewpoint, the ratio (F/W) is more preferably not greater than 65%.

In FIG. 2, a solid line LAM is a straight line that passes through the tip PA of the apex 32 and the width center PM. A solid line LAF is a straight line that passes through the tip PA of the apex 32 and the end PF of the turned-up portion 34b. An angle θ is an angle formed between the straight line LAM and the straight line LAF.

In the tire 2, when the ratio (F/W) of the height F of the turned-up portion 34b to the maximum width height W is not less than 48% and not greater than 68%, the angle θ formed between the straight line LAM, which passes through the tip PA of the apex 32 and the width center PM, and the straight line LAF, which passes through the tip PA of the apex 32 and the end PF of the turned-up portion 34b, is preferably not less than 35 degrees and not greater than 50 degrees.

When the angle θ is set so as to be not less than 35 degrees, the carcass 12 can be disposed further outside in the meridian cross-section. Since the carcass 12 is formed so as to be longer, the vertical stiffness is effectively reduced in the tire 2. From this viewpoint, the angle θ is more preferably not less than 38 degrees and further preferably not less than 40 degrees. When the angle θ is set so as to be not greater than 50 degrees, the contact area between the bead portion and the flange G is appropriately maintained. The fluctuation of friction and strain caused by repeated deformation and restoration of the bead portion during running is effectively suppressed, so that good durability is maintained. From this viewpoint, the angle θ is more preferably not greater than 48 degrees and further preferably not greater than 45 degrees.

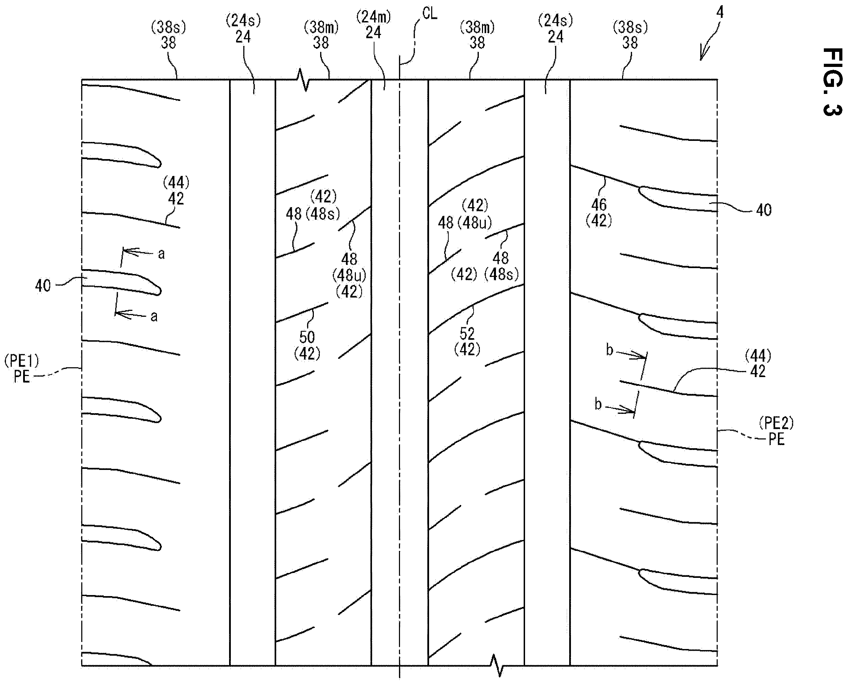

FIG. 3 shows a part of the outer surface of the tread 4. In FIG. 3, the right-left direction is the axial direction of the tire 2, and the up-down direction is the circumferential direction of the tire 2. The direction perpendicular to the surface of the drawing sheet of FIG. 3 is the radial direction of the tire 2. In FIG. 3, the tread reference end PE located on the left side is a first tread reference end PE1, and the tread reference end PE located on the right side is a second tread reference end PE2. When the tire 2 is mounted to a vehicle, the first tread reference end PE1 is located on the outer side in the width direction of the vehicle.

As described above, the grooves 22 are formed on the tread 4 of the tire 2, and the tread pattern is formed. Among the grooves 22 forming the tread pattern, grooves each having a groove width of 1.5 mm or less are referred to as sipes.

In the present invention, a groove extending substantially in the axial direction means that an angle of the groove with respect to the axial direction is not greater than 45 degrees. A sipe extending substantially in the axial direction is also referred to as a lateral sipe.

As described above, in the tire 2, the plurality of circumferential grooves 24 are formed on the tread 4. Accordingly, a plurality of land portions 38 are formed. In the tire 2, the three circumferential grooves 24 are formed on the tread 4, so that four land portions 38 are formed so as to be aligned in the axial direction. Among the four land portions 38, the land portion 38 located on each outer side in the axial direction is a shoulder land portion 38s. The land portion 38 located inward of the shoulder land portion 38s is a middle land portion 38m.

A lateral groove 40 is formed on each shoulder land portion 38s. The lateral groove 40 has at least a groove width of 2.0 mm or more. The lateral groove 40 has an end within the shoulder land portion 38s. The lateral groove 40 extends from this end toward the tread reference end PE. The lateral groove 40 extends substantially in the axial direction. The direction in which the lateral groove 40 on the shoulder land portion 38s on the first tread reference end PE1 side is inclined is the same as the direction in which the lateral groove 40 on the shoulder land portion 38s on the second tread reference end PE2 side is inclined. On each shoulder land portion 38s, a plurality of lateral grooves 40 are formed. These lateral grooves 40 are arranged at intervals in the circumferential direction.

A dead-end sipe 44 is formed as a lateral sipe 42 on each shoulder land portion 38s. The dead-end sipe 44 has an end in the shoulder land portion 38s. The dead-end sipe 44 extends from this end toward the tread reference end PE. The direction in which the dead-end sipe 44 is inclined is the same as the direction in which the lateral groove 40 is inclined. On each shoulder land portion 38s, a plurality of dead-end sipes 44 are formed. In the tire 2, the lateral grooves 40 and the dead-end sipes 44 are arranged alternately in the circumferential direction.

A connection sipe 46 is formed as a lateral sipe 42 on the shoulder land portion 38s on the second tread reference end PE2 side. The connection sipe 46 extends between the shoulder circumferential groove 24s and the lateral groove 40. The direction in which the connection sipe 46 is inclined is the same as the direction in which the lateral groove 40 is inclined. On each shoulder land portion 38s, connection sipes 46, the number of which is equal to the number of the lateral grooves 40, are formed.

Main dead-end sipes 48 are formed as lateral sipes 42 on each middle land portion 38m. Each main dead-end sipe 48 has an end in the middle land portion 38m. The main dead-end sipe 48 extends from this end toward the circumferential groove 24. In the tire 2, a main dead-end sipe 48 connecting the end thereof and the shoulder circumferential groove 24s is an outer main dead-end sipe 48s. A main dead-end sipe 48 connecting the end thereof and the middle circumferential groove 24m is an inner main dead-end sipe 48u.

A plurality of outer main dead-end sipes 48s are formed on each middle land portion 38m. These outer main dead-end sipes 48s are arranged at intervals in the circumferential direction. A plurality of inner main dead-end sipes 48u are formed on each middle land portion 38m. These inner main dead-end sipes 48u are arranged at intervals in the circumferential direction. The pitch between each outer main dead-end sipe 48s and the pitch between each inner main dead-end sipe 48u are equal to each other.

The direction in which the outer main dead-end sipes 48s are inclined is the same as the direction in which the inner main dead-end sipes 48u are inclined. The direction in which the inner main dead-end sipes 48u located on the first tread reference end PE1 side are inclined is the same as the direction in which the inner main dead-end sipe 48u located on the second tread reference end PE2 side are inclined.

In the tire 2, an inclination angle of each inner main dead-end sipe 48u is larger than an inclination angle of each outer main dead-end sipe 48s. Each outer main dead-end sipe 48s and each inner main dead-end sipe 48u are arranged such that an inclination angle of a line segment connecting the end of the outer main dead-end sipe 48s and the end of the inner main dead-end sipe 48u is larger than the inclination angle of the outer main dead-end sipe 48s and smaller than the inclination angle of the inner main dead-end sipe 48u. In the tire 2, a combination of an outer main dead-end sipe 48s and an inner main dead-end sipe 48u adjacent to the outer main dead-end sipe 48s is also referred to as a pair sipe.

A sub dead-end sipe 50 is formed as a lateral sipe 42 on the middle land portion 38m on the first tread reference end PE1 side. The sub dead-end sipe 50 has an end in the middle land portion 38m. The sub dead-end sipe 50 extends from this end toward the shoulder circumferential groove 24s. The direction in which the sub dead-end sipe 50 is inclined is the same as the direction in which the outer main dead-end sipe 48s is inclined. The sub dead-end sipe 50 is longer than the outer main dead-end sipe 48s. On this middle land portion 38m, a plurality of sub dead-end sipes 50 are formed. In the tire 2, the sub dead-end sipes 50 and the outer main dead-end sipes 48s are arranged alternately in the circumferential direction.

A transverse sipe 52 is formed as a lateral sipe 42 on the middle land portion 38m on the second tread reference end PE2 side. The transverse sipe 52 extends between the shoulder circumferential groove 24s and the middle circumferential groove 24m. The direction in which a portion on the shoulder circumferential groove 24s side of the transverse sipe 52 is inclined is the same as the direction in which the outer main dead-end sipe 48s is inclined. The direction in which a portion on the middle circumferential groove 24m side of the transverse sipe 52 is inclined is the same as the direction in which the inner main dead-end sipe 48u is inclined. On this middle land portion 38m, a plurality of transverse sipes 52 are formed. On the middle land portion 38m on the second tread reference end PE2 side, the transverse sipes 52 and pair sipes are arranged alternately in the circumferential direction.

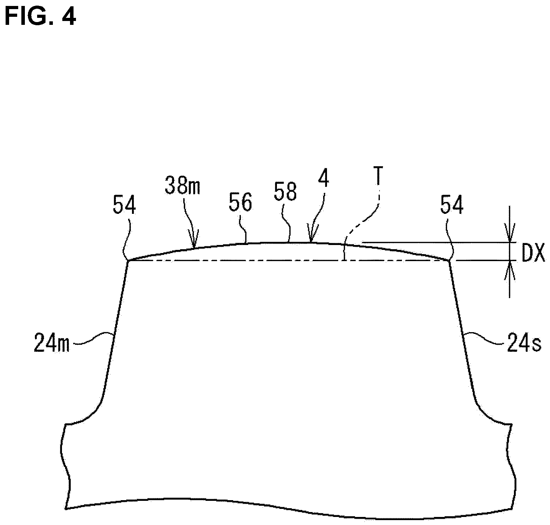

FIG. 4 shows an enlarged cross-sectional view of the middle land portion 38m. FIG. 4 shows a modification of the middle land portion 38m.

In FIG. 4, an alternate long and two short dashes line indicated by reference character T represents the above-described tread surface T. The tread surface T passes through right and left edges 54 of the middle land portion 38m. The tread surface T is a reference surface for the outer surface of the tread 4. An outer surface 56 of the middle land portion 38m shown in FIG. 4 is located outward of the tread surface T in the radial direction.

As shown in FIG. 4, the outer surface 56 of the middle land portion 38m has an outwardly curved contour. In the meridian cross-section, the contour of the outer surface 56 of the middle land portion 38m is represented by an arc that passes through the right and left edges 54 and a top 58.

In the tire 2, since the outer surface 56 of the middle land portion 38m has an outwardly curved contour, an increase in ground-contact pressure at each edge 54 of the middle land portion 38m is effectively suppressed. A ground-contact pressure distribution in which the difference between high and low ground-contact pressures is reduced is obtained, so that the tread 4 is sufficiently in close contact with a road surface. The coefficient of friction of the tire 2 is increased, and good braking performance is achieved. From this viewpoint, in the tire 2, the outer surface 56 of the middle land portion 38m preferably has an outwardly curved contour.

In FIG. 4, a length indicated by reference character DX is the maximum height of the outer surface 56 of the middle land portion 38m. The maximum height DX is represented as the shortest distance from the tread surface T to the top 58.

In the tire 2, from the viewpoint of achieving good braking performance, the maximum height DX of the outer surface 56 of the middle land portion 38m is preferably not less than 0.05 mm and more preferably not less than 0.08 mm. From the viewpoint of appropriately maintaining the volume of the middle land portion 38m and suppressing an increase in rolling resistance, the maximum height DX is preferably not greater than 0.15 mm and more preferably not greater than 0.12 mm.

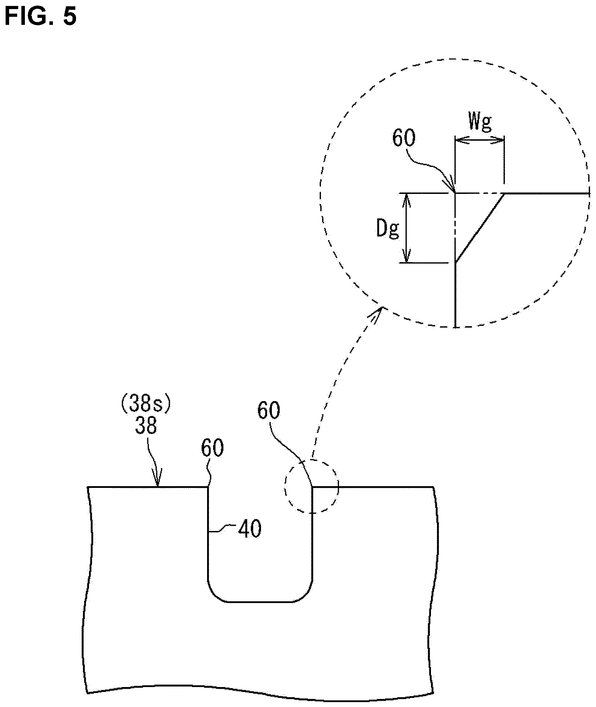

FIG. 5 shows a cross-section of the lateral groove 40 formed on the shoulder land portion 38s. FIG. 5 shows a modification of the lateral groove 40.

As described above, the lateral groove 40 extends substantially in the axial direction. Edges 60 of the lateral groove 40 also extend substantially in the axial direction. As shown in FIG. 5, the edge 60 is chamfered in this lateral groove 40. Accordingly, concentration of strain on the edge 60 of the lateral groove 40 during braking is suppressed. A ground-contact pressure distribution in which the difference between high and low ground-contact pressures is reduced is obtained, so that the tread 4 is sufficiently in close contact with a road surface. The coefficient of friction of the tire 2 is increased, and good braking performance is achieved. From this viewpoint, in the tire 2, preferably, the edge 60 of the lateral groove 40 is chamfered. In this case, from the viewpoint that the tread 4 can be more sufficiently in close contact with a road surface and the coefficient of friction of the tire 2 can be effectively increased, more preferably, both edges 60 of the lateral groove 40 are chamfered.

FIG. 5 shows an example in which the edge 60 of the lateral groove 40 is chamfered into a flat surface, but the edge 60 of the lateral groove 40 may be rounded.

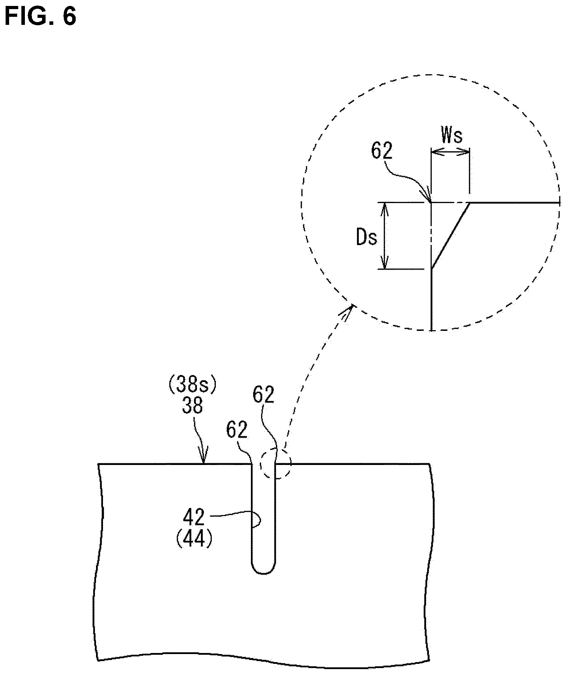

FIG. 6 shows a cross-section of the dead-end sipe 44 formed on the shoulder land portion 38s as an example of the lateral sipe 42 formed on the land portion 38. FIG. 6 shows a modification of the lateral sipe 42.

As described above, the lateral sipe 42 extends substantially in the axial direction. Edges 62 of the lateral sipe 42 also extend substantially in the axial direction. As shown in FIG. 6, the edge 62 is chamfered in this lateral sipe 42. Accordingly, concentration of strain on the edge 62 of the lateral sipe 42 during braking is suppressed. A ground-contact pressure distribution in which the difference between high and low ground-contact pressures is reduced is obtained, so that the tread 4 is sufficiently in close contact with a road surface. The coefficient of friction of the tire 2 is increased, and good braking performance is achieved. From this viewpoint, in the tire 2, preferably, the edge 62 of the lateral sipe 42 is chamfered. In this case, from the viewpoint that the tread 4 can be more sufficiently in close contact with a road surface and the coefficient of friction of the tire 2 can be effectively increased, more preferably, both edges 62 of the lateral sipe 42 are chamfered.

FIG. 6 shows an example in which the edge 62 of the lateral sipe 42 is chamfered into a flat surface, but the edge 62 of the lateral sipe 42 may be rounded.

In FIG. 5, a double-headed arrow Dg indicates the chamfer depth of the edge 60 of the lateral groove 40. A double-headed arrow Wg indicates the chamfer width of the edge 60. In FIG. 6, a double-headed arrow Ds indicates the chamfer depth of the edge 62 of the lateral sipe 42. A double-headed arrow Ws indicates the chamfer width of the edge 62.

In the tire 2, the chamfer depth Dg of the edge 60 of the lateral groove 40 is preferably larger than the chamfer depth Ds of the edge 62 of the lateral sipe 42. Accordingly, the coefficient of friction of the tire 2 is effectively increased. From this viewpoint, the chamfer depth Dg of the edge 60 of the lateral groove 40 is preferably not less than 2.0 mm and not greater than 3.0 mm, and the chamfer depth Ds of the edge 62 of the lateral sipe 42 is preferably not less than 1.0 mm and not greater than 2.0 mm.

In the tire 2, from the viewpoint of effectively increasing the coefficient of friction of the tire 2, the chamfer width Wg of the edge 60 of the lateral groove 40 is preferably not less than 1.0 mm and not greater than 2.0 mm. From the same viewpoint, the chamfer width Ws of the edge 62 of the lateral sipe 42 is preferably not less than 1.0 mm and not greater than 2.0 mm. In this case, the chamfer width Wg and the chamfer width Ws may be the same or different from each other.

In the tire 2, from the viewpoint of effectively increasing the coefficient of friction, preferably, lateral sipes 42 are formed on each middle land portion 38m so as to extend substantially in the axial direction, and the edges 62 of these lateral sipes 42 are chamfered. In this case, more preferably, both edges 62 of each lateral sipe 42 are chamfered. In the tire 2, in the case where the outer surface 56 of the middle land portion 38m has an outwardly curved contour, when lateral sipes 42 are formed on the middle land portion 38m so as to extend substantially in the axial direction and the edges 62 of these lateral sipes 42 are chamfered, the coefficient of friction is more effectively increased.

In the tire 2, from the viewpoint of effectively increasing the coefficient of friction, preferably, lateral grooves 40 and lateral sipes 42 are formed on each shoulder land portion 38s so as to extend substantially in the axial direction, and the edges 60 of the lateral grooves 40 and the edges 62 of the lateral sipes 42 are chamfered. In this case, more preferably, both edges 60 of each lateral groove 40 and both edges 62 of each lateral sipe 42 are chamfered.

In the case where lateral grooves 40 and lateral sipes 42 are formed on each shoulder land portion 38s so as to extend substantially in the axial direction and the edges 60 of the lateral grooves 40 and the edges 62 of the lateral sipes 42 are chamfered, from the viewpoint of more effectively increasing the coefficient of friction of the tire 2, the chamfer depth Dg of the edge 60 of each lateral groove 40 is preferably larger than the chamfer depth Ds of the edge 62 of each lateral sipe 42.

As described above, according to the present invention, the tire 2 that can achieve improvement of braking performance without a significant increase in rolling resistance is obtained.

### EXAMPLES

Hereinafter, the present invention will be described in further detail by means of examples, etc., but the present invention is not limited to these examples.

### [Example 1]

A pneumatic tire for a passenger car (tire size = 205/60R16) having the basic structure shown in FIG. 1 and having specifications shown in Table 1 below was obtained.

The ratio (R1/R2) of the radius R1 of the first arc included in the contour of each side surface to the radius R2 of the second arc included therein was 86%. The radius R1 was 55 mm.

The ratio (A/H) of the height A of the apex to the cross-sectional height H was 10%.

The carcass was composed of one carcass ply, and the ratio (F/W) of the height F of the turned-up portion to the maximum width height W was 58%.

### [Comparative Example 1]

A tire of Comparative Example 1 is a conventional tire. In Comparative Example 1, the ratio (R1/R2) of the radius R1 of the first arc included in the contour of each side surface to the radius R2 of the second arc included therein was 100%. The radius R1 was 70 mm.

The ratio (A/H) of the height A of the apex to the cross-sectional height H was 20%.

The carcass was composed of two carcass plies. Although not shown, the two carcass plies were turned up around each bead from the inner side toward the outer side in the axial direction. The ratio of the height of the first turned-up portion located on the outer side in the axial direction to the maximum width height was 65%. The ratio of the height of the second turned-up portion located inward of the first turned-up portion in the axial direction to the maximum width height was 20%.

### [Examples 2 to 7 and Comparative Examples 2 to 4]

Tires of Examples 2 to 7 and Comparative Examples 2 to 4 were obtained in the same manner as Example 1, except that the radius R1 of the first arc and the ratio (R1/R2) were set as shown in Tables 1 and 2 below while adjusting the radius R2 of the second arc.

### [Examples 8 and 9]

Tires of Examples 8 and 9 were obtained in the same manner as Example 1, except that the ratio (A/H) was set as shown in Table 3 below.

### [Examples 10 and 11]

Tires of Examples 10 and 11 were obtained in the same manner as Example 1, except that the ratio (F/W) was set as shown in Table 3 below.

### [Example 12]

A tire of Example 12 was obtained in the same manner as Example 1, except that the middle land portion was changed to a middle land portion having the configuration shown in FIG. 4. The maximum height DX was set to 0.10 mm.

### [Example 13]

A tire of Example 13 was obtained in the same manner as Example 12, except that both edges of each of the lateral grooves and the lateral sipes formed on the land portions were chamfered. The chamfer width Wg of each lateral groove was 1.5 mm, and the chamfer depth Dg of each lateral groove was 2.5 mm. The chamfer width Ws of each lateral sipe was 1.5 mm, and the chamfer depth Ds of each lateral sipe was 1.5 mm. The fact of being chamfered is represented as "Y" in the cell for chamfer in Table 3 below. "N" in cells for chamfer in each table represents that no chamfer is provided.

### [Braking Performance]

Test tires were fitted to rims (size = 16×6.5) and inflated with air to adjust the internal pressures of the tires to 250 kPa. The tires were mounted to a test vehicle (passenger car), and the test vehicle was driven on a test course for braking performance evaluation. A braking distance from a speed of 110 km/h was measured. The results are shown as indexes in Tables 1 to 3 below. The higher the value is, the shorter the braking distance is and the better the braking performance of the tire is.

### [Rolling Resistance Coefficient (RRC)]

Using a rolling resistance testing machine, a rolling resistance coefficient (RRC) was measured when a test tire ran on a drum at a speed of 80 km/h under the following conditions. The results are shown as indexes in Tables 1 to 3 below. The higher the value is, the lower the rolling resistance of the tire is. In this evaluation, if the index is 95 or higher, it is acceptable as it is determined that there is no significant increase in rolling resistance.
Rim: 16×6.5J
Internal pressure: 250 kPa
Vertical load: 5.43 kN

### [Level of Achievement]

The total of the indexes obtained in the evaluation of braking performance and rolling resistance was calculated. The results are shown in the cells for "Level of achievement" in Tables 1 to 3 below. The higher the value is, the better the result is.

### [Durability]

A test tire was fitted to a rim (size = 16×6.5) and inflated with air to adjust the internal pressure of the tire to 250 kPa. A durability test was carried out using a drum tester by a step speed method according to the load/speed performance test specified by ECE30. The running distance until the tire became broken was measured. The results are shown as indexes in Tables 1 to 3 below. The higher the value is, the better the durability of the tire is. In this evaluation, if the index is 95 or higher, it is acceptable as it is determined that there is no significant decrease in durability.

**[Table 1]**

| | | Comparative Example 1 | Example 2 | Example 3 | Example 4 | Example 5 | Example 1 |
|---|---|---|---|---|---|---|---|
| R1/R2 [%] | | 100 | 70 | 75 | 80 | 86 | 86 |
| R1 [mm] | | 70 | 53 | 53 | 60 | 49 | 55 |
| A/H [%] | | 20 | 10 | 10 | 10 | 10 | 10 |
| Number of plies | | 2 | 1 | 1 | 1 | 1 | 1 |
| F/W [%] | | - | 58 | 58 | 58 | 58 | 58 |
| DX [mm] | | - | - | - | - | - | - |
| Chamfer | Lateral groove | N | N | N | N | N | N |
| | Sipe | N | N | N | N | N | N |
| Braking performance | | 85 | 105 | 108 | 110 | 105 | 110 |
| RRC | | 93 | 100 | 100 | 100 | 100 | 100 |
| Level of achievement | | 178 | 205 | 208 | 210 | 205 | 210 |
| Durability | | 100 | 95 | 100 | 100 | 100 | 100 |

**[Table 2]**

| | | Example 6 | Example 7 | Comparative Example 2 | Comparative Example 3 | Comparative Example 4 |
|---|---|---|---|---|---|---|
| R1/R2 [%] | | 86 | 86 | 97 | 100 | 140 |
| R1 [mm] | | 65 | 70 | 60 | 70 | 70 |
| A/H [%] | | 10 | 10 | 10 | 10 | 10 |
| Number of plies | | 1 | 1 | 1 | 1 | 1 |
| F/W [%] | | 58 | 58 | 58 | 58 | 58 |
| DX [mm] | | - | - | - | - | - |
| Chamfer | Lateral groove | N | N | N | N | N |
| | Sipe | N | N | N | N | N |
| Braking performance | | 107 | 105 | 102 | 100 | 80 |
| RRC | | 100 | 100 | 100 | 100 | 105 |
| Level of achievement | | 207 | 205 | 202 | 200 | 185 |
| Durability | | 100 | 100 | 100 | 100 | 100 |

**[Table 3]**

| | | Example 8 | Example 9 | Example 10 | Example 11 | Example 12 | Example 13 |
|---|---|---|---|---|---|---|---|
| R1/R2 [%] | | 86 | 86 | 86 | 86 | 86 | 86 |
| R1 [mm] | | 55 | 55 | 55 | 55 | 55 | 55 |
| A/H [%] | | 5 | 15 | 10 | 10 | 10 | 10 |
| Number of plies | | 1 | 1 | 1 | 1 | 1 | 1 |
| F/W [%] | | 58 | 58 | 50 | 65 | 58 | 58 |
| DX [mm] | | - | - | - | - | 0.10 | 0.10 |
| Chamfer | Lateral groove | N | N | N | N | N | Y |
| | Sipe | N | N | N | N | N | Y |
| Braking performance | | 110 | 108 | 110 | 108 | 120 | 140 |
| RRC | | 100 | 95 | 100 | 100 | 100 | 100 |
| Level of achievement | | 210 | 203 | 210 | 208 | 220 | 240 |
| Durability | | 96 | 103 | 98 | 100 | 100 | 100 |

As shown in Tables 1 to 3, it is confirmed that, in each Example, it is possible to achieve improvement of braking performance without a significant increase in rolling resistance. From the evaluation results, advantages of the present invention are clear.

The above-described technology capable of achieving improvement of braking performance without a significant increase in rolling resistance can also be applied to various tires.

## Claims

1. A tire (2) comprising:
a tread (4) configured to come into contact with a road surface;
a pair of sidewalls (6) each connected to an end of the tread (4) and located inward of the tread (4) in a radial direction;
a pair of beads (10) each located inward of the sidewall (6) in the radial direction, and
a carcass (12) located inward of the tread (4) and the pair of sidewalls (6), wherein
each bead (10) includes a core (30) and an apex (32) located outward of the core (30) in the radial direction,
in a meridian cross-section in a state where the tire (2) is fitted on a normal rim (R), an internal pressure of the tire (2) is adjusted to 250 kPa, and no load is applied to the tire (2), a contour of each side surface (S) including a maximum width position (PW) includes two arcs tangent to each other at the maximum width position (PW),
of the two arcs, the arc located inward of the maximum width position (PW) in the radial direction is a first arc, and the arc located outward of the maximum width position (PW) in the radial direction is a second arc, and
a ratio (R1/R2) of a radius (R1) of the first arc to a radius (R2) of the second arc is not less than 70% and not greater than 91%, **characterized in that**
a ratio (A/H) of a height (A) of the apex (32) to a cross-sectional height (H) is not less than 5% and not greater than 15%,

2. The tire (2) according to claim 1, wherein the radius (R1) of the first arc is not less than 50 mm and not greater than 65 mm.

3. The tire (2) according to claim 1 or 2, wherein
the carcass (12) includes a carcass ply (34),
the carcass ply (34) includes a ply body (34a) extending between one bead (10) and the other bead (10), and a pair of turned-up portions (34b) connected to the ply body (34a) and turned up around the beads (10) from an inner side toward an outer side in an axial direction, and
a ratio (F/W) of a distance (F) in the radial direction from a bead base line (BBL) to an end (PF) of the turned-up portion (34b) to a distance (W) in the radial direction from the bead base line (BBL) to the maximum width position (PW) is not less than 48% and not greater than 68%.

4. The tire (2) according to any one of claims 1 to 3, wherein
a plurality of circumferential grooves (24, 24s, 24m) are formed on the tread (4), whereby a plurality of land portions (38) are formed,
among the plurality of land portions (38), the land portion (38) located on each outer side in the axial direction is a shoulder land portion (38s), and the land portion (38) located inward of the shoulder land portion (38s) is a middle land portion (38m),
an outer surface (56) of the middle land portion (38m) has an outwardly curved contour, and
a maximum height (DX) of the outer surface (56) is not less than 0.05 mm and not greater than 0.15 mm.

5. The tire (2) according to claim 4, wherein
a lateral sipe (42) is formed on the middle land portion (38m) so as to extend substantially in the axial direction, and
an edge (62) of the lateral sipe (42) is chamfered.

6. The tire (2) according to claim 4 or 5, wherein
a lateral groove (40) and a lateral sipe (42) are formed on the shoulder land portion (38s) so as to extend substantially in the axial direction, and
edges (60, 62) of the lateral groove (40) and the lateral sipe (42) are chamfered.

## Patentansprüche

1. Reifen (2), umfassend:
eine Lauffläche (4), die so konfiguriert ist, dass sie mit einer Straßenoberfläche in Kontakt kommt;
ein Paar von Seitenwänden (6), die jeweils mit einem Ende der Lauffläche (4) verbunden sind und in radialer Richtung innerhalb der Lauffläche (4) angeordnet sind
ein Paar von Wülsten (10), die jeweils innerhalb der Seitenwand (6) in der radialen Richtung angeordnet sind, und
eine Karkasse (12), die innerhalb der Lauffläche (4) und des Paars von Seitenwänden (6) angeordnet ist, wobei
jeder Wulst (10) einen Kern (30) und einen Scheitelpunkt (32) aufweist, der in der radialen Richtung außerhalb des Kerns (30) angeordnet ist,
in einem Meridianquerschnitt in einem Zustand, in dem der Reifen (2) auf eine normale Felge (R) aufgezogen ist, ein Innendruck des Reifens (2) auf 250 kPa eingestellt ist und keine Last auf den Reifen (2) aufgebracht wird, eine Kontur jeder Seitenfläche (S), die eine Position maximaler Breite (PW) einschließt, zwei Bögen einschließt, die einander an der Position maximaler Breite (PW) tangieren,
von den zwei Bögen der Bogen, der in der radialen Richtung innerhalb der Position der maximalen Breite (PW) liegt, ein erster Bogen ist, und der Bogen, der in der radialen Richtung außerhalb der Position der maximalen Breite (PW) liegt, ein zweiter Bogen ist, und
ein Verhältnis (R1/R2) eines Radius (R1) des ersten Bogens zu einem Radius (R2) des zweiten Bogens nicht kleiner als 70 % und nicht größer als 91 % ist, **dadurch gekennzeichnet, dass**
ein Verhältnis (A/H) einer Höhe (A) des Scheitels (32) zu einer Querschnittshöhe (H) nicht weniger als 5 % und nicht mehr als 15 % beträgt,

2. Reifen (2) nach Anspruch 1, wobei der Radius (R1) des ersten Bogens nicht kleiner als 50 mm und nicht größer als 65 mm ist.

3. Reifen (2) nach Anspruch 1 oder 2, wobei
die Karkasse (12) eine Karkassenlage (34) aufweist,
die Karkassenlage (34) einen Lagenkörper (34a) umfasst, der sich zwischen einem Wulst (10) und dem anderen Wulst (10) erstreckt, und ein Paar umgeschlagener Abschnitte (34b), die mit dem Lagenkörper (34a) verbunden sind und um die Wülste (10) von einer Innenseite zu einer Außenseite in einer axialen Richtung umgeschlagen sind, und
ein Verhältnis (F/W) eines Abstands (F) in der radialen Richtung von einer Wulstgrundlinie (BBL) zu einem Ende (PF) des umgeschlagenen Abschnitts (34b) zu einem Abstand (W) in der radialen Richtung von der Wulstgrundlinie (BBL) zu der Position maximaler Breite (PW) nicht weniger als 48 % und nicht mehr als 68 % beträgt.

4. Reifen (2) nach einem der Ansprüche 1 bis 3, wobei
eine Vielzahl von Umfangsrillen (24, 24s, 24m) auf der Lauffläche (4) ausgebildet sind, wodurch eine Vielzahl von Stegabschnitten (38) gebildet wird,
unter der Vielzahl von Stegabschnitten (38) der Stegabschnitt (38), der sich auf jeder äußeren Seite in der axialen Richtung befindet, ein Schulterstegabschnitt (38s) ist, und der Stegabschnitt (38), der sich innerhalb des Schulterstegabschnitts (38s) befindet, ein mittlerer Stegabschnitt (38m) ist,
eine Außenfläche (56) des mittleren Stegabschnitts (38m) eine nach außen gekrümmte Kontur aufweist, und
eine maximale Höhe (DX) der Außenfläche (56) nicht weniger als 0,05 mm und nicht mehr als 0,15 mm beträgt.

5. Reifen (2) nach Anspruch 4, wobei
ein seitlicher Einschnitt (42) an dem mittleren Stegabschnitt (38m) so ausgebildet ist, dass er sich im Wesentlichen in der axialen Richtung erstreckt, und
eine Kante (62) des seitlichen Einschnitts (42) abgeschrägt ist.

6. Reifen (2) nach Anspruch 4 oder 5, wobei
eine seitliche Rille (40) und ein seitlicher Einschnitt (42) auf dem Schulterstegabschnitt (38s) so ausgebildet sind, dass sie sich im Wesentlichen in der axialen Richtung erstrecken, und
Kanten (60, 62) der seitlichen Rille (40) und des seitlichen Einschnitts (42) abgeschrägt sind.

## Revendications

1. Pneu (2) comprenant :
une bande de roulement (4) configurée pour venir en contact avec une surface de route ;
une paire de parois latérales (6), chacune reliée à une extrémité de la bande de roulement (4) et située vers l'intérieur de la bande de roulement (4) dans une direction radiale ;
une paire de talons (10), chacun situé vers l'intérieur de la paroi latérale (6) dans la direction radiale, et
une carcasse (12) située vers l'intérieur de la bande de roulement (4) et de la paire de parois latérales (6), dans lequel
chaque talon (10) inclut une tringle (30) et un sommet (32) situé à l'extérieur de la tringle (30) dans la direction radiale,
dans une section méridienne dans un état dans lequel le pneu (2) est monté sur une jante normale (R), une pression interne du pneu (2) est ajustée à 250 kPa et aucune charge n'est appliquée au pneu (2 ), un contour de chaque surface latérale (S) incluant une position de largeur maximale (PW) inclut deux arcs tangents l'un à l'autre à la position de largeur maximale (PW),
des deux arcs, l'arc situé à l'intérieur de la position de largeur maximale (PW) dans la direction radiale est un premier arc et l'arc situé à l'extérieur de la position de largeur maximale (PW) dans la direction radiale est un second arc et
un rapport (R1/R2) d'un rayon (R1) du premier arc à un rayon (R2) du second arc est supérieur ou égal à 70 % et inférieur ou égal à 91 %, **caractérisé en ce que**
un rapport (A/H) d'une hauteur (A) du sommet (32) à une hauteur de section transversale (H) est supérieur ou égal à 5 % et inférieur ou égal à 15 %.

2. Pneu (2) selon la revendication 1, dans lequel le rayon (R1) du premier arc est supérieur ou égal à 50 mm et inférieur ou égal à 65 mm.

3. Pneu (2) selon la revendication 1 ou 2, dans lequel
la carcasse (12) inclut un pli de carcasse (34),
le pli de carcasse (34) inclut un corps de pli (34a) s'étendant entre un talon (10) et l'autre talon (10) et une paire de parties relevées (34b) reliées au corps de pli (34a) et relevées autour des talons (10) d'un côté interne vers un côté externe dans une direction axiale, et
un rapport (F/W) entre une distance (F) dans la direction radiale d'une ligne de base de talon (BBL) à une extrémité (PF) de la partie relevée (34b) et une distance (W) dans la direction radiale de la ligne de base de talon (BBL) à la position de largeur maximale (PW) est supérieur ou égal à 48 % et inférieur ou égal à 68 %.

4. Pneu (2) selon l'une quelconque des revendications 1 à 3, dans lequel
une pluralité de rainures circonférentielles (24, 24s, 24m) sont formées sur la bande de roulement (4), selon lesquelles une pluralité de parties de surface d'appui (38) sont formées,
parmi la pluralité de parties de surface d'appui (38), la partie de surface d'appui (38) située sur chaque côté externe dans la direction axiale est une partie de surface d'appui d'épaulement (38s),et la partie de surface d'appui (38) située à l'intérieur de la partie de surface d'appui d'épaulement (38s) est une partie de surface d'appui médiane (38m),
une surface externe (56) de la partie de surface d'appui médiane (38m) présente un contour incurvé vers l'extérieur et
une hauteur maximale (DX) de la surface externe (56) est supérieure ou égale à 0,05 mm et inférieure ou égale à 0,15 mm.

5. Pneu (2) selon la revendication 4, dans lequel
une lamelle latérale (42) est formée sur la partie de surface d'appui médiane (38m) de manière à s'étendre sensiblement dans la direction axiale et
un bord (62) de la lamelle latérale (42) est chanfreiné.

6. Pneu (2) selon la revendication 4 ou 5, dans lequel
une rainure latérale (40) et une lamelle latérale (42) sont formées sur la partie de surface d'appui d'épaulement (38s) de manière à s'étendre sensiblement dans la direction axiale et
des bords (60, 62) de la rainure latérale (40) et de la lamelle latérale (42) sont chanfreinés.
